# FASCICULE DE BREVET EUROPEEN

(11) **EP 3 013 459 B1**
(45) Date de publication et mention de la délivrance du brevet: **11.01.2017**
(21) Numéro de dépôt: 14736324.6
(22) Date de dépôt: 20.06.2014
(51) Int. Cl.: B01D 53/50, B01D 53/80, F23J 7/00, F23J 15/00

(54) **PROCEDE ET DISPOSITIF DE TRAITEMENT DE GAZ PAR INJECTION DE COMPOSE PULVERULENT ET DE PHASE AQUEUSE**
VERFAHREN UND VORRICHTUNG ZUR BEHANDLUNG VON GASEN MITTELS INJEKTION EINER PULVERFÖRMIGEN VERBINDUNG UND EINE WÄSSRIGEN PHASE
METHOD AND DEVICE FOR TREATING GAS BY INJECTING A POWDERED COMPOUND AND AN AQUEOUS PHASE

(30) Priorité: 25.06.2013 BE 201300435
(43) Date de publication de la demande: 04.05.2016
(73) Titulaire: S.A. Lhoist Recherche et Développement, 1342 Ottignies-Louvain-la-Neuve (BE)
(72) Inventeur: PETTIAU, Xavier, B-6010 Couillet (BE); NYSSEN, Olivier, B-7011 Ghlin (BE); BRASSEUR, Alain, B-4460 Grâce-Hollogne (BE); LAUDET, Alain, B-5000 Namur (BE)
(74) Mandataire: Gevers Patents
(86) Numéro de dépôt international: PCT/EP2014/063017
(87) Numéro de publication internationale: WO 2014/206880

(56) Documents cités:
- CN-Y- 201 168 568
- FR-A1- 2 580 949
- JP-A- 10 216 572
- US-A1- 2012 251 423
- METSCHKE J: "RAUCHGASREINIGUNG NACH DEM CDAS-VERFAHREN", VGB KRAFTWERKSTECHNIK, VGB KRAFTWERKSTECHNIK GMBH. ESSEN, DE, vol. 80, no. 10, 2000, pages 108-112, XP000963987, ISSN: 0372-5715

## Description

La présente invention se rapporte à un procédé de traitement de gaz présentant un sens d'écoulement prédéterminé dans une conduite de gaz comprenant les étapes
a) d'injection d'un composé pulvérulent dans la conduite de gaz de fumées en un point d'injection de composé pulvérulent, par l'intermédiaire d'une tubulure d'injection de composé pulvérulent, ladite tubulure d'injection présentant une face externe et une face interne agencée pour être en contact avec ledit composé pulvérulent, de manière à permettre la formation d'un nuage ou flux de particules de composé pulvérulent dans ladite conduite de gaz,
b) d'injection d'une phase liquide aqueuse monophasique sous forme de gouttelettes, dans ladite conduite de gaz,
c) de captation de polluants des gaz par ledit composé pulvérulent, et
d) de récupération séparée dudit composé pulvérulent enrichi en polluants et des gaz appauvris en polluants.

Typiquement, le traitement des gaz, en particulier des gaz de fumées, requiert l'abattement de gaz acides, notamment HCl, SO₂ et/ou HF, lequel abattement peut être réalisé à sec, par injection d'une substance, souvent minérale, sèche et pulvérulente dans un flux de gaz de fumées ou au travers d'un filtre comprenant un lit de particules solides fixes ou en mouvement. Dans ce cas, le composé pulvérulent comprend généralement un composé calco-magnésien, en particulier de la chaux, de préférence éteinte ou hydratée ou un composé sodique comme un carbonate ou un bicarbonate de sodium. D'autres composés minéraux peuvent aussi être utilisés notamment ceux utilisés pour l'abattement des dioxines, furannes et/ou métaux lourds dont le mercure, comme par exemple, ceux à base de phyllosilicates, tels la sépiolite ou l'halloysite ou analogues.

La présente invention vise plus particulièrement les procédés d'abattement des gaz acides dans les gaz, en particulier les gaz de fumées, par injection d'un produit pulvérulent ayant des capacités de capture de polluants acides dans le flux de gaz afin d'améliorer les rendements d'abattement des composants gazeux acides des gaz traités.

On connaît plus particulièrement un traitement de ces gaz de fumées avec de la chaux hydratée pulvérulente, amélioré par l'utilisation de chaux hydratée humidifiée au lieu de chaux hydratée pulvérulente sèche. En effet l'absorption des polluants de la phase gazeuse par les particules de la phase solide est améliorée par la présence d'eau. On qualifie parfois un tel procédé de traitement des gaz de fumées par voie semi-sèche. On connaît par ailleurs un procédé d'utilisation de chaux hydratée et d'eau où un lait de chaux est injecté dans le flux de gaz de fumées. Malheureusement l'injection d'un lait de chaux suppose la mise en oeuvre de moyens spécifiques (turbines de dispersion, pompe de circulation) énergivores et sujets à l'usure et à l'érosion et peut conduire à des problèmes de colmatage. Les documents CN 2011 68568 et JP 10-216 572 proposent chacun une alternative destinée à solutionner les problèmes de colmatage en réalisant la suspension de lait de chaux in situ pendant l'injection. A cette fin, une lance constituée de deux tubes concentriques, c'est-à-dire d'un tube interne et d'un tube externe, est utilisée. L'eau est injectée via le tube interne alors que la chaux hydratée est injectée via le tube externe. Selon CN 2011 68568, la position du tube interne peut être ajustée par rapport à la position du tube externe et il est donc possible d'avoir un tube interne pour l'eau ayant un orifice de sortie en saillie ou en retrait ou encore au même niveau par rapport à un orifice de sortie de chaux hydratée du tube externe.

Selon ces documents, la conception des lances de pulvérisation impose que le tube de projection d'eau soit interne au tube de projection de chaux hydratée pulvérulente. Il en résulte donc que la chaux pulvérisée rencontre un obstacle au sein du tube externe de pulvérisation qui réside dans le tube interne de projection d'eau. De cette façon, la chaux hydratée entre en contact avec la surface généralement métallique et froide du tube interne, sur laquelle la chaux tend à se colmater.

De plus, selon ces documents, le taux d'humidité de la chaux hydratée induit un rapport massique eau/chaux de 5 à 6 pour former une suspension in situ. Cette suspension procure un effet annexe néfaste pour le traitement des gaz de fumées en ce que le gaz est en outre significativement refroidi à l'injection de chaux hydratée. Cela suppose de disposer de fumées suffisamment chaudes pour que la dépollution soit efficace ; or cela n'est pas recherché de nos jours alors que les industriels ont une tendance de plus en plus marquée à récupérer au mieux la chaleur des gaz de fumées pour des raisons économiques et environnementales.

Par ailleurs, lorsque la chaux hydratée entre en contact avec une surface froide, comme c'est le cas de la surface du tube interne de projection d'eau de ces documents, de la condensation survient au sein du tube de projection de chaux hydratée, ce qui a également pour résultat de favoriser un colmatage du tube de projection et d'ainsi perturber l'injection de la chaux dans le flux de gaz de fumées.

Enfin, un rapport massique eau/chaux aussi élevé que celui précité suppose une disponibilité et une consommation importante d'eau.

On connaît également un dispositif d'injection de chaux dans des gaz de fumée, dans lequel la tubulure d'injection de chaux hydratée ou pulvérulente est entourée d'une tubulure externe concentrique au travers de laquelle on injecte un gaz (v. US2012/0251423).

La présente invention a pour but de pallier les inconvénients de l'état de la technique en procurant un procédé permettant le traitement des gaz, en particulier des gaz de fumées, par un composé pulvérulent, de préférence minéral, en particulier de la chaux hydratée, au cours duquel le risque de colmatage est significativement réduit et la consommation d'eau est minimisée et cela sans refroidir de façon sensible les gaz, en permettant ainsi de ne pas nuire à la récupération des calories issues de ces gaz à traiter.

Pour résoudre ce problème, il est prévu suivant l'invention un procédé tel qu'indiqué au début caractérisé en ce que ladite étape d'injection de phase liquide aqueuse monophasique, sous forme de gouttelettes, est effectuée à l'intérieur de ladite conduite de gaz dans ledit nuage ou flux de particules de composé pulvérulent, de manière à humidifier ces particules de composé pulvérulent à l'intérieur de la conduite de gaz, lors de leur injection, selon un rapport pondéral entre la phase liquide aqueuse monophasique injectée sous forme de gouttelettes et le composé pulvérulent injecté supérieur ou égal à 0,05 et inférieur ou égal à 1,2, ladite étape d'injection de phase liquide aqueuse monophasique étant réalisée par l'intermédiaire d'au moins une tubulure d'injection de phase liquide aqueuse monophasique située dans un espace périphérique localisé autour de ladite face externe et présentant une enveloppe externe et en ce que le procédé comprend en outre une isolation de ladite face externe par au moins une couche d'isolant disposée dans ledit espace périphérique.

Selon la présente invention, l'humidification du composé pulvérulent est effectuée au point d'injection du composé pulvérulent, et ce dans le conduit/flux de gaz à traiter. De cette façon, les particules du composé minéral et les gouttelettes de phase aqueuse coexistent très localement, et le composé pulvérulent est humidifié in situ et de manière contrôlée.

Dans le nuage de gouttelettes de phase aqueuse et de particules de composé pulvérulent injectées selon le rapport pondéral de la phase aqueuse sous forme de gouttelettes au composé pulvérulent susdit, une couche de gouttelettes de phase aqueuse est ainsi créée à la surface des particules de composé pulvérulent et facilite le transfert des polluants, notamment acides, à abattre vers la phase solide du composé pulvérulent. La couche de gouttelettes de phase aqueuse est obtenue via la co-injection contrôlée de particules de composé pulvérulent et de phase aqueuse selon ledit rapport pondéral et l'humidification in situ du composé pulvérulent évite le problème récurrent de colmatage des lances d'injection de composé pulvérulent, en particulier de chaux hydratée humidifiée.

Plus précisément, la phase aqueuse est injectée dans un voisinage immédiat par rapport au point d'injection de composé pulvérulent.

Par « voisinage immédiat », on entend, au sens de la présente invention, que la distance entre le point d'injection de la phase aqueuse et le point d'injection du composé pulvérulent est inférieure ou égale au diamètre du point d'injection/de la tubulure d'injection de composé pulvérulent, en particulier inférieure ou égale au rayon.

Avantageusement, le composé pulvérulent est un composé minéral. Il peut comprendre un composé calco-magnésien, en particulier de la chaux, de préférence éteinte ou hydratée. Dans un mode de réalisation particulier, le composé minéral est choisi parmi ceux utilisés pour l'abattement des dioxines, furannes et/ou métaux lourds dont le mercure, comme par exemple, ceux à base de sépiolite ou d'halloysite ou analogues. Le composé pulvérulent utilisé peut aussi être organique, notamment carboné, en particulier du type charbon actif ou coke de lignite. Le composé pulvérulent peut aussi être un mélange de ces composés.

De préférence, la phase aqueuse est de l'eau liquide ou une solution aqueuse de composé alcalin choisi dans le groupe constitué des hydroxydes, des carbonates, des bicarbonates, des hydrogénocarbonates, des nitrates, des phosphates, des persulfates, et des monocarboxylates de métal alcalin, notamment de sodium, de potassium et/ou de lithium, et de leurs mélanges , ou une solution aqueuse de composé à base d'ammoniac ou d'urée, tel que les sels d'ammonium, ou une solution aqueuse de composé à base d'halogénures d'alcalin ou alcalino-terreux ou d'ammonium, en particulier de chlorure et/ou de bromure, notamment de sodium, de potassium, de calcium ou de magnésium. Par ailleurs, la phase aqueuse peut également contenir des acides, notamment organiques, difonctionnels (acides di-basiques) ou non.

Dans tous les cas, la phase aqueuse est monophasique. Autrement dit, la phase aqueuse est constituée d'un liquide, en particulier d'eau liquide.

De manière avantageuse, la température de la phase aqueuse avant injection dans ladite conduite de gaz de fumées est inférieure à 100°C, de préférence inférieure à 40°C, particulièrement inférieure à 30°C, plus particulièrement inférieure à 20°C.

Suivant une forme particulière de réalisation, l'étape d'injection de phase aqueuse est effectuée dans un voisinage immédiatement en aval dudit point d'injection de composé pulvérulent par rapport audit sens d'écoulement prédéterminé des gaz dans ladite conduite de gaz.

Par les termes « voisinage immédiatement en aval » du point d'injection de composé pulvérulent, on entend au sens de la présente invention, que, par rapport au sens d'écoulement des gaz, les gouttelettes de phase aqueuse sont pulvérisées juste après le composé pulvérulent. Le composé pulvérulent injecté rencontre donc d'abord les gaz et immédiatement après les gouttelettes de phase aqueuse formées, ce qui permet donc d'humidifier le composé pulvérulent et non les gaz à traiter.

Dans une autre forme particulière de réalisation, l'étape d'injection de phase aqueuse est effectuée dans un voisinage immédiatement en amont dudit point d'injection de composé minéral par rapport audit sens d'écoulement prédéterminé des gaz de fumées dans ladite conduite de gaz de fumées.

Avantageusement, ladite étape d'injection de composé pulvérulent est effectuée dans la conduite de gaz suivant un sens d'injection qui forme un angle de 90 à 150 degrés, de préférence inférieur ou égal à 145 degrés, de manière préférentielle inférieur ou égal à 140 degrés et en particulier inférieur ou égal à 135 degrés, par rapport au sens d'écoulement prédéterminé des gaz.

Dans une forme de réalisation particulière, lesdites gouttelettes de phase aqueuse présentent une taille moyenne de gouttelettes comprise entre 500 et 5000 µm, de préférence de 500 à 5000 µm, en fonction des conditions d'injection.

De préférence, ledit composé pulvérulent, en particulier la chaux hydratée pulvérulente, présente une taille moyenne de particules d₅₀ inférieure à 80 µm, avantageusement inférieure à 50 µm, de préférence inférieure à 35 µm, de préférence inférieure à 25 µm et de manière particulière inférieure ou égale à 10 µm, en particulier inférieure ou égale à 8 µm.

Il est entendu que le composé pulvérulent peut être un composé minéral pulvérulent co-injecté avec un autre composé pulvérulent, notamment carboné, en particulier du type charbon actif ou coke de lignite.

Plus particulièrement, il est prévu suivant le procédé de la présente invention que ledit composé pulvérulent, en particulier la chaux hydratée, présente avant injection dans ladite conduite de gaz une humidité (teneur massique en eau) comprise entre 0,2 et 10%, en particulier entre 0,5 et 4 %, de préférence inférieure à 2%, en particulier inférieure à 1,5%.

En effet, lorsque la teneur en eau libre du composé pulvérulent est supérieure à 10%, des problèmes de mise en oeuvre apparaissent. En particulier, lorsque le composé pulvérulent est de la chaux éteinte (hydratée), si cette teneur en eau libre est supérieure à 2%, respectivement 4%, il devient difficile, respectivement très problématique de le manipuler (problèmes d'écoulement, d'encroutement...).

Dans un mode de réalisation particulier selon la présente invention, le rapport pondéral entre ladite phase aqueuse injectée sous forme de gouttelettes et ledit composé pulvérulent injecté est supérieur ou égal à 0,1, de manière préférentielle supérieur ou égal à 0,2, et inférieur ou égal à 1, et plus particulièrement inférieur ou égal à 0,8. Ce rapport pondéral est relativement faible en comparaison de celui annoncé dans les documents antérieurs CN 2011 68568 et JP 10-216 572 et n'entraîne pas de refroidissement sensible des gaz à traiter car, selon la présente invention, la proportion réduite d'eau ajoutée permet l'humidification du composé pulvérulent, en particulier de la chaux hydratée, sans humidifier et donc refroidir significativement les gaz.

En effet, dans les documents antérieurs CN 2011 68568 et JP 10-216 572, le rapport pondéral élevé entre l'eau et la chaux hydratée compris entre 5 et 6 est dicté par le fait qu'une suspension de chaux hydratée (lait de chaux) est pulvérisée dans le gaz à traiter. Dans ce cas, la température des gaz est fortement diminuée par l'injection d'une grande quantité d'eau qui consomme des calories à l'évaporation.

De manière particulièrement avantageuse, dans le procédé selon la présente invention, lesdits gaz présentent, avant injection dudit composé pulvérulent, une température comprise entre 10 et 1100°C, en particulier entre 10 et 100°C, notamment entre 15 et 80°C, en particulier entre 20 et 70°C ou entre 100°C et 300°C, de préférence entre 130°C et 250°C et de manière préférentielle entre 150°C et 230°C, en particulier entre 160°C et 220°C. Dans une autre variante du procédé selon l'invention, lesdits gaz présentent, avant injection dudit composé pulvérulent, une température comprise entre 300°C et 500°C préférence entre 320°C et 450°C, de manière préférentielle entre 330°C et 400°C ou entre 850 et 1100°C, de préférence entre 900 et 1100°C et de manière préférentielle ou entre 950°C et 1050°C

Comme on peut le constater, la température des gaz n'est pas sensiblement influencée par la faible quantité d'eau et la taille de gouttelettes qui, selon l'invention, contribuent essentiellement à humidifier le composé pulvérulent. De plus, l'injection de phase aqueuse ayant lieu dans le nuage de composé pulvérulent injecté, notamment dans un voisinage immédiat du point d'injection du composé pulvérulent, le contact entre les gouttelettes de phase aqueuse et les particules de composé pulvérulent est favorisé et très rapide, ce qui permet une optimisation de l'abattement des polluants acides, facilité par la couche d'eau formée autour des particules de composé pulvérulent.

Dans une variante du procédé selon la présente invention, lesdits gaz présentent, après injection dudit composé pulvérulent et de ladite phase aqueuse sous forme de gouttelettes, une température comprise entre n et n - 10°C, de préférence entre n et n - 8°C, de préférence entre n et n - 5°C, en particulier entre n et n - 3°C, n étant la température des gaz avant injection du composé pulvérulent et de la phase aqueuse.

En particulier, dans une forme de réalisation avantageuse, ladite injection de la phase aqueuse est réalisée au travers d'une tubulure de pulvérisation, de préférence sous la forme d'un jet plan en éventail, à une pression comprise entre 2 et 150 bar. Dans une variante, cette pression sera plutôt comprise entre 2 et 20 bar, de préférence entre 3 et 15 bar et de manière préférentielle d'environ 8 bar. Dans une autre variante, la pression sera comprise entre 20 et 150 bar, en particulier entre 30 et 100 bar. Ces hautes pressions permettent d'éviter un encrassement de la tubulure de pulvérisation.

De cette façon, dans cette forme de réalisation particulière de l'invention, des gouttelettes très fines sont obtenues et, dés lors qu'il n'est pas recherché selon l'invention la création d'un nuage de vapeur, une pression élevée peut être utilisée car elle permet une bonne dispersion sous la forme de gouttelettes très fines et contribue à l'efficacité du contact entre les gouttelettes de phase aqueuse et les particules de composé pulvérulent en améliorant leur humidification, mais sans refroidir les gaz chauds.

D'autres formes de réalisation du procédé suivant l'invention sont indiquées dans les revendications annexées.

L'invention a aussi pour objet un dispositif d'injection de composé pulvérulent, de préférence minéral, en particulier de chaux hydratée pulvérulente, à introduire dans une conduite de gaz de fumées, comprenant une source de composé pulvérulent, une tubulure d'injection de composé pulvérulent alimentée par la source de composé pulvérulent et agencée pour déboucher dans ladite conduite de gaz, ladite tubulure d'injection de composé pulvérulent présentant une face externe et une face interne agencée pour être en contact avec ledit composé pulvérulent, ledit dispositif d'injection de composé pulvérulent comprenant en outre une source de phase liquide aqueuse monophasique et au moins une tubulure d'injection de phase liquide aqueuse monophasique sous forme de gouttelettes alimentée par cette source de phase liquide aqueuse monophasique.

Un tel dispositif est connu de l'état de la technique, comme par exemple des documents CN 2011 68568 et JP 10-216 572. Dans ces documents qui entendent procurer un dispositif adapté pour traiter les gaz de fumées par un lait de chaux (suspension), la tubulure d'injection d'eau est concentrique à une tubulure de plus grand diamètre d'injection de chaux hydratée afin de réaliser une suspension de chaux hydratée in situ.

Comme mentionné dans le document CN 2011 68568, il est prévu dans certains dispositifs de traitement de gaz de fumées par un lait de chaux que la position du tube interne puisse être ajustée par rapport à la position du tube externe. Dans un tel cas, le tube interne pour l'eau présente un orifice de sortie en saillie ou en retrait ou encore au même niveau par rapport à un orifice de sortie de chaux hydratée du tube externe.

Malheureusement, quelle que soit la configuration choisie, la présence du tube interne concentrique au tube externe de pulvérisation de chaux hydratée impose aux particules de chaux hydratée de buter contre le tube interne de projection d'eau. La chaux hydratée entre donc en contact avec la surface métallique et froide du tube interne, sur laquelle la chaux tend à se colmater. La solution apportée aux problèmes de colmatage antérieurs est donc toute relative.

De plus, selon ces documents, la configuration concentrique et la volonté de former une suspension de chaux hydratée in situ a pour effet qu'un rapport eau/chaux de 5 à 6 est requis. Malheureusement, dans un tel cas, le dispositif selon les documents CN 2011 68568 et JP 10-216 572 a pour effet de refroidir les gaz de fumées, en posant ainsi une nouvelle problématique pour les acteurs industriels ayant de plus en plus tendance à récupérer les calories issues des gaz de fumées pour proposer des procédés plus économiques et respectueux de l'environnement.

Enfin, lorsque la chaux hydratée entre en contact avec une surface froide, comme c'est le cas de la surface du tube interne de projection d'eau de ces documents, de la condensation survient au sein du tube de projection de chaux hydratée, ce qui a également pour résultat de colmater le tube de projection et ainsi perturber l'injection de la chaux dans le flux de gaz de fumées.

La présente invention a pour but de pallier les inconvénients de l'état de la technique en procurant un dispositif permettant l'injection de composé pulvérulent, de préférence minéral, en particulier de chaux hydratée, et l'humidification de ses particules dans le traitement des gaz dont le risque de colmatage est significativement réduit, et cela sans refroidir les gaz, en permettant ainsi de ne pas nuire à la récupération des calories issues de ces gaz à traiter.

Pour résoudre ce problème, il est prévu suivant l'invention, un dispositif tel qu'indiqué précédemment caractérisé en ce que ladite au moins une tubulure d'injection de phase liquide aqueuse monophasique est située dans un espace périphérique localisé autour de ladite face externe de la tubulure d'injection de composé pulvérulent et présentant une enveloppe externe, et en ce qu'au moins une couche d'isolant est disposée dans ledit espace périphérique entre ladite face externe de ladite tubulure d'injection de composé pulvérulent et l'enveloppe externe.

De cette façon, le composé pulvérulent injecté dans la tubulure d'injection de composé pulvérulent ne rencontre aucun obstacle et d'autant moins de surface froide ou métallique contre laquelle il aurait tendance à se déposer et à colmater. De plus, ladite au moins une tubulure de phase aqueuse située dans un espace périphérique localisé autour de la face externe de la tubulure d'injection de composé pulvérulent est ainsi agencée pour permettre une injection de gouttelettes de phase aqueuse, en particulier d'eau liquide, dans un voisinage immédiat par rapport au point d'injection de composé pulvérulent. Par voisinage immédiat, on entend, au sens de la présente invention, que la distance séparant les diamètres extérieurs des tubulures d'injection de phase aqueuse et de composé pulvérulent respectivement est inférieure ou égale au diamètre de la tubulure d'injection de composé pulvérulent, de préférence inférieure à au rayon.

Par ailleurs, la configuration particulière de ladite au moins une tubulure d'injection de phase aqueuse et de ladite tubulure d'injection de composé pulvérulent permet de traiter les gaz en voie quasi sèche, en humidifiant seulement le composé pulvérulent, en particulier la chaux, et dans ce dernier cas, sans former de suspension de lait de chaux. Cette opération est effectuée sans humidifier significativement les gaz, et donc sans refroidir les gaz dont la récupération calorifique est de plus en plus souhaitée. Cette configuration particulière ne requiert pas, contrairement à l'état de la technique divulgué dans les documents CN 2011 68568 et JP 10-216 572, de rapport pondéral eaux/chaux élevé et permet de réduire la valeur depuis entre 5 et 6 à une valeur inférieure ou égale à 1,2 de préférence inférieur ou égal à 1, plus particulièrement inférieur ou égal à 0,8. En conséquence, un nuage de particules de composé pulvérulent, en particulier de chaux hydratée, est créé dans le flux de gaz de fumées et des gouttelettes de phase aqueuse, notamment d'eau, en quantité relativement faible sont injectées dans le flux de gaz. Ces gouttelettes de phase aqueuse rencontrent le nuage dense de particules de composé pulvérulent et améliorent l'abattement des polluants, notamment des composés acides des gaz, sans refroidir les gaz.

Dans une forme de réalisation préférentielle, le dispositif comporte une pluralité de tubulures d'injection de phase aqueuse sous forme de gouttelettes, reliées chacune à un distributeur connecté à ladite source de phase aqueuse, chaque tubulure de ladite pluralité de tubulures d'injection étant située dans ledit espace périphérique, chaque tubulure étant en outre munie d'une vanne.

Avantageusement, dans le dispositif selon la présente invention, chaque tubulure d'injection de phase aqueuse est agencée dans un tube concentrique, hors duquel la tubulure d'injection de phase aqueuse est rétractable.

Plus particulièrement, selon la présente invention, chaque tubulure d'injection de phase aqueuse comporte un orifice de sortie sous la forme d'une fente ou pulvérisateur plan.

Dans une variante de la présente invention, le distributeur est relié à un moyen de mise sous pression agencé pour conférer à la phase aqueuse une pression comprise entre 2 et 150 bar, notamment entre 2 et 20 bar, de préférence entre 3 et 15 bar et de manière plus préférentielle d'environ 8 bar et dans une autre variante entre 20 et 150 bar, en particulier entre 30 et 100 bar. Il peut bien sûr s'agir d'une alimentation en phase aqueuse, en particulier en eau liquide, directement disponible aux pressions précitées.

Comme indiqué précédemment, il est prévu suivant l'invention que le dispositif comporte une enveloppe externe autour dudit espace périphérique.

Le dispositif selon la présente invention comporte, dans ledit espace périphérique, au moins une couche d'isolant entre ladite face externe de ladite tubulure d'injection de composé pulvérulent et ladite enveloppe externe.

Dans encore un autre mode de réalisation de la présente invention, le dispositif comporte en outre un dispositif de fermeture dudit espace périphérique muni d'une série d'orifices parmi lesquels un orifice à composé pulvérulent et au moins un orifice à phase aqueuse, ledit orifice à composé pulvérulent étant agencé pour loger une sortie de ladite tubulure d'injection de composé pulvérulent, chaque orifice à phase aqueuse étant agencé pour loger une sortie de chaque tubulure d'injection de phase aqueuse.

De préférence, dans le dispositif selon la présente invention, ladite enveloppe externe présente un diamètre compris entre 100 et 250 mm, de préférence inférieur à 200 mm et de manière plus préférentielle entre 110 et 170 mm, en particulier entre 125 et 150 mm.

Avantageusement, ladite tubulure d'injection de composé pulvérulent présente un diamètre compris entre 75 et 150 mm, de préférence entre 80 et 125 mm et en particulier d'environ 100 mm.

Plus particulièrement, selon la présente invention, chaque tubulure d'injection de phase aqueuse présente un diamètre compris entre 5 et 30 mm, de préférence entre 6 et 20 mm et de manière plus préférentielle entre 8 et 16 mm.

D'autres formes de réalisation du dispositif suivant l'invention sont indiquées dans les revendications annexées.

D'autres caractéristiques, détails et avantages de l'invention ressortiront de la description donnée ci-après, à titre non limitatif et en faisant référence aux dessins annexés.

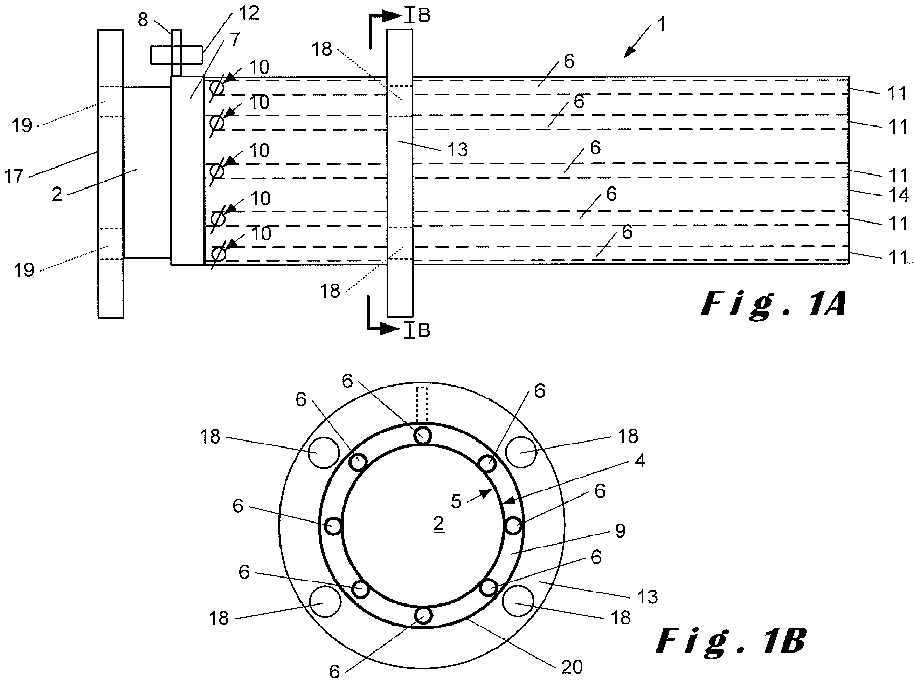

La figure 1A est une vue schématique de côté d'une première forme de réalisation du dispositif de traitement de gaz selon la présente invention. La figure 1 B est une vue en coupe selon la ligne I-I de la figure 1A.

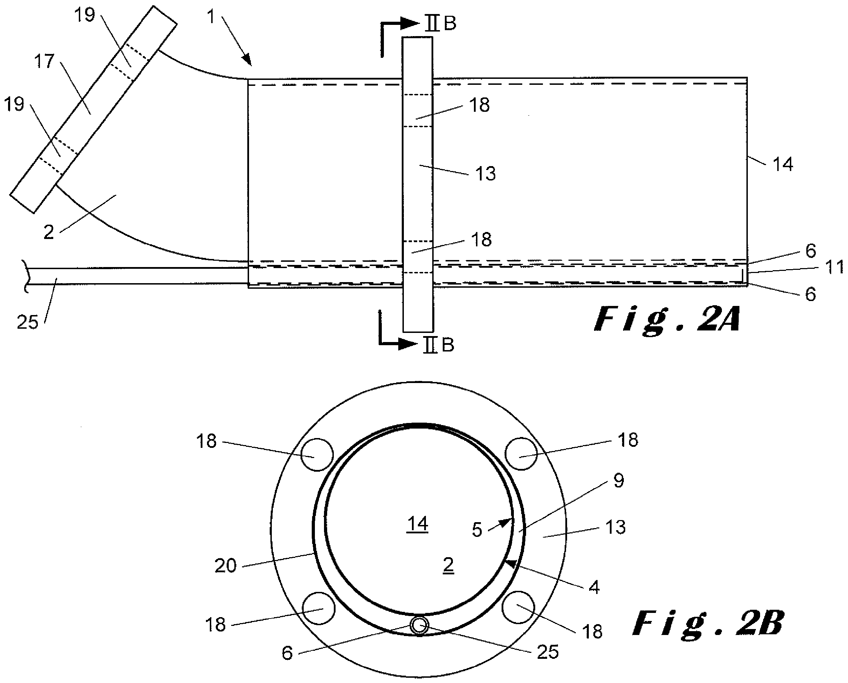

La figure 2A est une vue schématique de côté d'une deuxième forme de réalisation du dispositif de traitement de gaz selon la présente invention. La figure 2B est une vue en coupe selon la ligne II-II de la figure 2A.

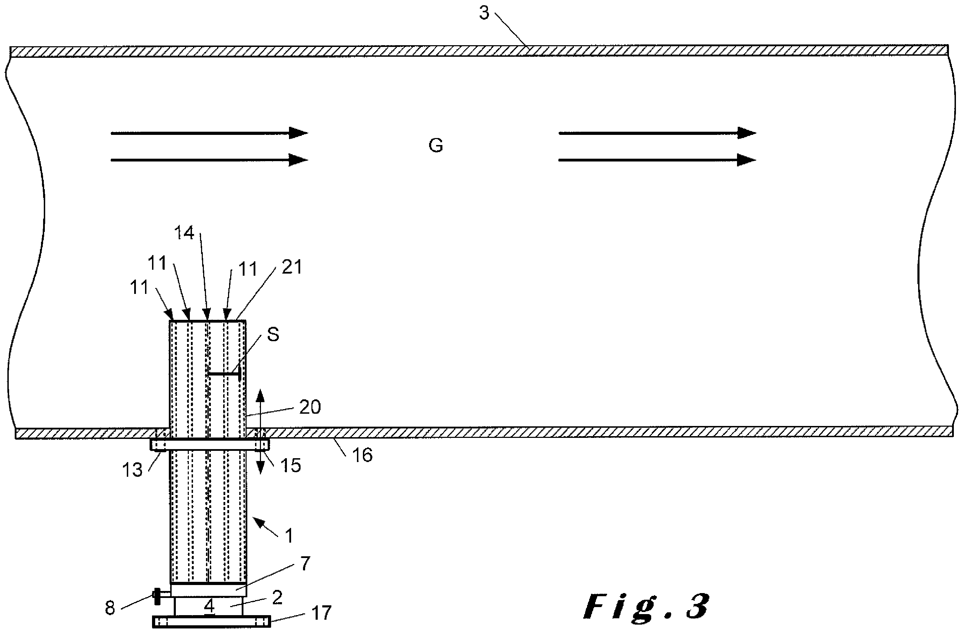

La figure 3 est une vue schématique de côté de la forme de réalisation selon la figure 1 du dispositif de traitement de gaz selon la présente invention, utilisé par exemple dans une conduite de gaz de fumées, le sens d'injection du composé pulvérulent étant ici perpendiculaire au sens d'écoulement des gaz de fumées.

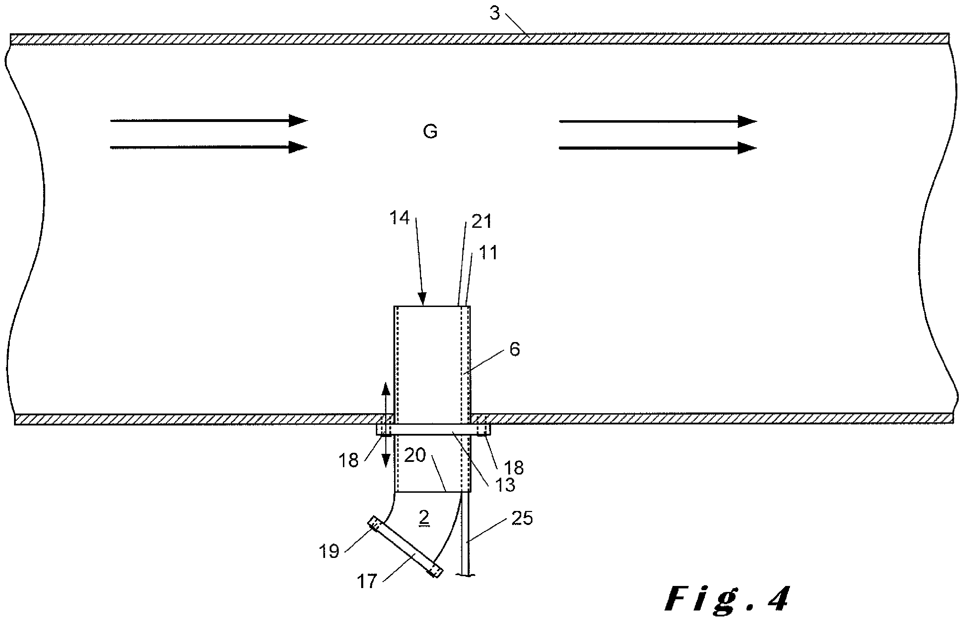

La figure 4 est une vue schématique de côté de la deuxième forme de réalisation selon la figure 2 du dispositif de traitement de fumées selon la présente invention, utilisé dans une conduite de gaz de fumées, le sens d'injection du composé pulvérulent étant ici aussi perpendiculaire au sens d'écoulement des gaz de fumées.

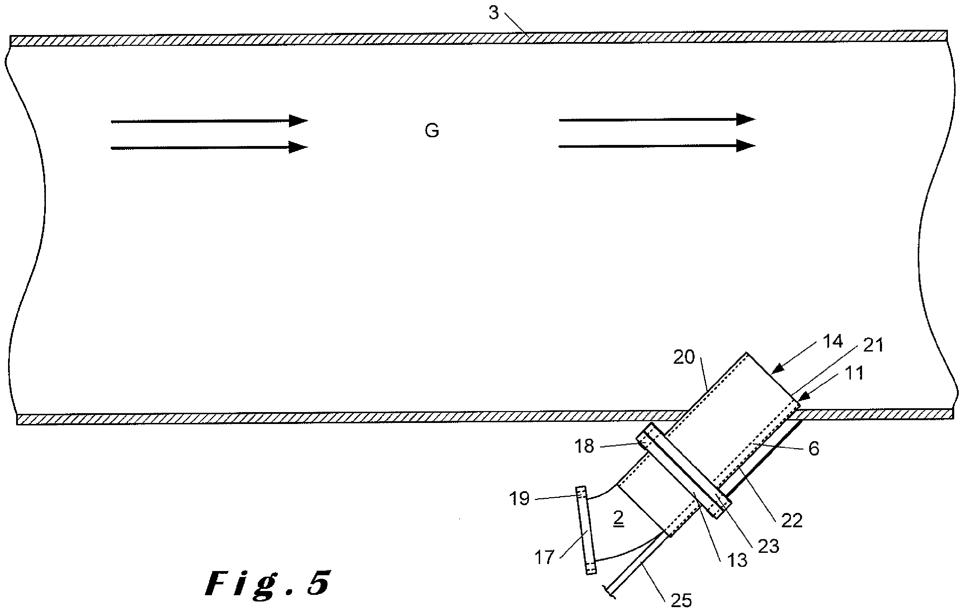

La figure 5 est une vue schématique de côté de la forme de réalisation selon la figure 2 du dispositif de traitement de fumées selon la présente invention, utilisé dans une conduite de gaz de fumées. Ici le sens d'injection du composé pulvérulent est situé en oblique par rapport au sens d'écoulement des gaz de fumées.
Les figures 3 à 5 illustrent des modes, parmi d'autres, de couplage de dispositifs suivant l'invention à une conduite de gaz de fumées.

Sur les figures, les éléments identiques ou analogues portent les mêmes références. Le composé pulvérulent injecté est dans les cas illustrés de nature minérale et les gaz traités sont des gaz de fumées.

Comme on peut le constater sur les figures 1A et 1B, le dispositif selon la présente invention est un dispositif d'injection de composé minéral pulvérulent 1 à introduire dans une conduite de gaz de fumées, comprenant une tubulure d'injection de composé minéral pulvérulent 2 relié à une source de composé minéral pulvérulent (non illustrée). La tubulure d'injection de composé minéral est agencée pour déboucher dans ladite conduite de gaz de fumées 3 (voir figure 3) et pour permettre la sortie de composé minéral via un orifice de sortie de composé minéral 14. La tubulure d'injection de composé minéral 2 présente une face externe 4 et une face interne 5. En fonctionnement, la face interne 5 est en contact avec ledit composé minéral pulvérulent lors de son alimentation dans la tubulure d'injection 2.

Le dispositif d'injection de composé minéral pulvérulent 1 comprend dans cette forme de réalisation illustrée une pluralité de tubulures d'injection de phase aqueuse 6 sous forme de gouttelettes, reliées chacune à un distributeur 7 connecté à une alimentation en phase aqueuse 8. Comme on peut le constater à la figure 1A ou 1B, chaque tubulure 6 de la pluralité de tubulures d'injection est située autour de la tubulure d'injection de composé minéral 2 dans un espace extérieur à celle-ci, appelé ici espace périphérique 9. Chaque tubulure d'injection de phase aqueuse 6 comprend en outre une vanne 10 située entre le distributeur 7 et la sortie de phase aqueuse 11 de chaque tubulure d'injection de phase aqueuse 6. La sortie de phase aqueuse 11 sous forme de gouttelettes de chaque tubulure d'injection de phase aqueuse est en pratique avantageusement réalisée par un orifice de sortie de phase aqueuse sous la forme d'une fente ou pulvérisateur plan, à l'aide d'un gicleur (non représenté).

A l'aide des vannes 10, il est possible de ne pas alimenter certaines des tubulures 6 et par exemple d'alimenter uniquement celles situées immédiatement en aval du point d'injection du composé minéral par rapport au sens d'écoulement G des gaz de fumées dans la conduite de gaz de fumées 3.

Le distributeur 7 est relié à une alimentation en phase aqueuse sous pression 8. Dans une variante du dispositif, un moyen de mise sous pression 12 permet de conférer la pression voulue à l'eau entrant via l'alimentation en eau 8. La pression de l'alimentation en phase aqueuse 8 est typiquement comprise entre 2 et 150 bar. Dans une variante, cette pression sera plutôt comprise entre 2 et 20 bar, de préférence entre 3 et 15 bar et de manière plus préférentielle d'environ 8 bar. Dans une autre variante, la pression sera comprise entre 20 et 150 bar, en particulier entre 30 et 100 bar. Ces hautes pressions permettent d'éviter un encrassement de la tubulure de pulvérisation

Le dispositif d'injection de composé minéral comprend en outre une bride 13 munie d'orifices traversant 18 afin de pouvoir boulonner ou fixer par tout autre moyen le dispositif de traitement de gaz de fumées à une conduite de gaz de fumées.

En effet, comme on peut le voir à la figure 3, la conduite de gaz de fumées 3 à traiter comporte un orifice pour l'introduction du dispositif 1. Celui-ci est introduit dans cet orifice et fixé sur la conduite de manière courante, par la bride 13 et des moyens de fixation 15. Le serrage de la bride 13 permet de maintenir un appui sur la face externe 16 de la conduite de gaz de fumées 3, mais également assure l'étanchéité de la connexion du dispositif selon la présente invention.

Dans la forme de réalisation illustrée aux figures 1A et 1B, une deuxième bride 17 est présente sur le dispositif de traitement de gaz de fumées. Cette bride 17 est munie d'une série d'orifices traversant 19 agencés pour accueillir des moyens de fixation. La bride 17 est agencée pour être reliée à une source courante de composé minéral (non illustrée).

Avantageusement, une enveloppe externe 20 est présente autour dudit espace périphérique 9. L'enveloppe externe 20 présente de préférence un diamètre compris entre 100 et 250 mm, de préférence inférieur à 200 mm et de manière plus préférentielle entre 110 et 170 mm, en particulier entre 125 et 150 mm.

Dans l'espace périphérique 9, on peut prévoir une couche d'isolant entre la face externe 4 de ladite tubulure d'injection de composé minéral pulvérulent et l'enveloppe externe 20. L'isolant peut être simplement de l'air ou toute matière isolante connue de l'homme de métier. Il permet d'éviter le refroidissement de la face externe 4 qui est isolée des tubulures 6 ce qui réduit les risques d'agglomération contre la face interne 5 du composé minéral circulant dans la tubulure d'injection de composé minéral.

Le dispositif selon la présente invention comprend en outre de préférence un capuchon ou dispositif de fermeture 21 dudit espace périphérique. Ce capuchon est muni d'une série d'orifices parmi lesquels un orifice de sortie pour le composé minéral 14 et autant d'orifices de sortie pour la phase aqueuse 11 que de tubulures à phase aqueuse 6 présentes.

Pour l'injection de composé minéral, un tube cylindrique 2 de diamètre d'environ 125 mm en acier inoxydable est typiquement utilisé, lequel est monté sur une bride 13. L'acier inoxydable est une source d'agglomération et de colmatage du composé minéral, et en conséquence, le tube 2 en acier inoxydable (tubulure d'injection de composé minéral 2) doit être aussi court que possible et aussi direct que possible (sans obstacle) pour réduire les zones mortes. Dès lors, le tube sensiblement cylindrique 2 (un coude peut notamment être utilisé comme illustré à la figure 2A) doit prendre en compte ces considérations. En bref, le dispositif selon la présente invention comporte un tel tube cylindrique d'injection de composé minéral 2 qui a été modifié de telle façon qu'au moins une tubulure d'injection de phase aqueuse 6 puisse être insérée le long du tube sensiblement cylindrique d'injection de composé minéral 2 sans créer d'obstacle dans le flux de particules du composé minéral dans la tubulure/tube sensiblement cylindrique 2. Dans la forme de réalisation illustrée aux figures 1A, 1B et 3, huit tubulures d'injection de phase aqueuse 6, sous forme de gouttelettes, ont été placées autour de la tubulure d'injection de composé minéral 2, et les diamètres de ces tubulures 6 ont été choisis de manière à ce que les tubulures 6 puissent s'intégrer dans la bride 13.

Typiquement, la tubulure d'injection de composé minéral pulvérulent 2 présente un diamètre compris entre 75 et 150 mm, de préférence entre 80 et 125 mm et en particulier d'environ 100 mm. Généralement, chaque tubulure d'injection d'eau 6 présente un diamètre compris entre 5 et 30 mm, de préférence entre 6 et 20 mm et de manière plus préférentielle entre 8 et 16 mm.

Lorsqu'il est souhaitable de traiter des gaz de fumées dans une conduite par de la chaux hydratée pour abattre entre autres des polluants acides, le dispositif selon la présente invention est positionné comme illustré par exemple à la figure 3. De la chaux hydratée est alors injectée dans la tubulure d'injection de chaux hydratée 2 et quitte la tubulure via l'orifice de sortie 14. A ce moment, un nuage de chaux hydratée, dont les particules présentent typiquement une taille moyenne de particules d₅₀ inférieure à 80 µm, avantageusement inférieure à 50 µm, de préférence inférieure à 35 µm, de préférence inférieure à 25 µm et de manière particulière inférieure ou égale à 10 µm, en particulier inférieure ou égale à 8 µm, est formé dans la conduite de gaz de fumées à traiter 3. Avantageusement, avant injection dans les gaz de fumées, la chaux hydratée présente une humidité comprise entre 0,2 et 10% en poids, en particulier entre 0,5 et 4 % en poids, de préférence inférieure à 2 %, en particulier inférieure à 1,5%.

La phase aqueuse sous pression entre dans le distributeur 7 via ladite alimentation 8 et pénètre alors dans les tubulures d'injection d'eau 6 pour lesquelles les vannes 10 ou certaines d'entre elles sont en position ouverte.

Suivant un forme perfectionnée du procédé selon la présente invention, l'étape d'injection de la phase aqueuse sous forme de gouttelettes est effectuée dans ledit nuage ou flux de composé minéral dans ladite conduite de gaz de fumées 3, dans un voisinage immédiatement en aval dudit point d'injection du composé minéral par rapport au sens d'écoulement des gaz de fumées (indiqué par une double flèche G à la figure 3), et ce, dans ladite conduite de gaz de fumées 3. De cette façon, le composé minéral pulvérulent injecté est humidifié et pas ou très peu les gaz de fumées à traiter. L'injection de gouttelettes de solution aqueuse dans un voisinage immédiatement en aval des particules de composé minéral injectées, par rapport au sens d'écoulement des gaz de fumées à traiter, est effectuée dans cette forme de réalisation en fermant les vannes 10 présentes sur les tubulures d'injection de phase aqueuse 6 situées en amont et en ouvrant celles des tubulures situées en aval.

Dans le dispositif, illustré sur la figure 3, seules les tubulures d'injection de gouttelettes de phase aqueuse sous pression situées dans la partie S du dispositif de traitement de gaz de fumées selon la présente invention (en aval par rapport au flux du gaz) peuvent avoir leurs vannes en position ouverte alors que les autres tubulures d'injection de gouttelettes sous pression présentent des vannes en position fermée. De cette façon, les gouttelettes de phase aqueuse sous pression injectées sont introduites dans un voisinage immédiatement en aval du point d'injection de particules de composé minéral, et les particules de composé minéral sont avantageusement humidifiées.

Les polluants des gaz de fumées sont alors captés par ledit composé minéral et ce de manière améliorée par la présence des particules de phase aqueuse entourant les particules de composé minéral. Ensuite, le composé minéral enrichi en composés polluants et des gaz de fumées appauvris en polluants sont récupérés séparément de manière courante, notamment par filtration.

Le dispositif mixte d'injection de composé minéral/ phase aqueuse selon la présente invention est donc un concept simple, aisé et peu coûteux qui permet d'améliorer la capture des gaz acides à partir de gaz de fumées.

La température des gaz de fumées est typiquement comprise entre 100 et 1100°C. Dans certaines installations, cette température varie de 110°C et 350°C, de préférence entre 130°C et 250°C et de manière plus préférentielle entre 150°C et 230°C, en particulier 180° C et 220° C. Dans d'autres cas, notamment les activités génératrices de SO₂ comme polluant principal, la température des gaz de fumées est typiquement comprise entre 250°C et 500°C ou entre 850 et 1100°C plus en amont (plus proche de la zone de combustion), de préférence entre 300°C et 450°C ou entre 900 et 1100°C plus en amont et de manière préférentielle entre 330°C et 400°C ou entre 950°C et 1050°C plus en amont. L'effet de l'humidification du composé minéral est de relativement courte durée puisque les gouttelettes de phase aqueuse s'évaporent très vite dans les gaz chauds. Par conséquent, le contact entre les particules de composé minéral injectées dans les gaz de fumées et les gouttelettes d'eau doit être obtenu aussi rapidement que possible.

La taille des gouttelettes de phase aqueuse est en moyenne comprise entre 500 et 5000 µm, de préférence entre 500 et 1000 µm ou entre 1000 et 5000 µm en fonction des conditions d'injection, et est obtenue en particulier en utilisant des tubulures à orifices de sortie plats (sous la forme de fentes) au travers desquels les gouttelettes de phase aqueuse sont formées. La taille des gouttelettes obtenues favorise également le contact entre les gouttelettes de phase aqueuse injectées dans le nuage de particules de composé minéral et les particules de composé minéral dès leur injection dans la conduite de gaz de fumées.

Comme mentionné précédemment, il est généralement difficile d'injecter dans des gaz de fumées une composition minérale, en particulier une chaux hydratée humide (contenant plus de 2% voire 4% d'eau) ou préalablement humidifiée à cause de l'agglomération des particules qui se produit et qui a pour effet de colmater les tubulures d'injection. De plus, une chaux hydratée humide ou préalablement humidifiée est plus facilement sujette à la carbonatation (assez rapide), ce qui induit une réduction des performances de captation. Enfin, les particules agglomérées de composé minéral, en particulier de chaux hydratée, humide présentent des capacités de capture réduites en raison de la diminution de l'accessibilité à leurs pores. Typiquement, ce sont les fines particules qui sont recherchées pour améliorer les performances de capture. L'utilisation du dispositif selon la présente invention permet que les fines particules de composé minéral injectées dans la conduite de gaz de fumées à traiter soient humidifiées en tant que telles, *in situ,* et réagissent avec les gaz notamment acides dans le nuage de gouttelettes de phase aqueuse créé directement et sèchent également in situ car l'évaporation est très rapide dans les gaz chauds de fumées. Par conséquent, l'évaporation de l'eau se produit avant que les particules n'aient eu le temps de s'agglomérer.

Ceci est également dû au fait que, selon la présente invention, la quantité d'eau injectée est uniquement la quantité d'eau nécessaire pour humidifier les particules de composé minéral et pour créer un nuage formé de particules de composé minéral et de gouttelettes de phase aqueuse. Le rapport pondéral entre ladite phase aqueuse injectée sous forme de gouttelettes et ledit composé minéral pulvérulent injecté est inférieur ou égal à 1,2, de préférence inférieur ou égal à 1 et en particulier inférieur ou égal à 0,8. Le rapport pondéral susdit est également supérieur ou égal à 0,1 et particulièrement supérieur ou égal à 0,2. En conséquence, la phase aqueuse injectée sous forme de fines gouttelettes n'a que peu d'impact sur la température des gaz de fumées à traiter et ne perturbe pas les étapes ultérieures potentielles de récupération calorifique. Selon la présente invention, les gaz de fumées présentent après injection du composé minéral et de la phase aqueuse sous forme de gouttelettes une température comprise entre n et n - 10°C, de préférence entre n et n - 8°C, de préférence entre n et n - 5°C, en particulier n - 3°C, n étant la température des gaz de fumées avant injection du composé minéral et de ladite phase aqueuse.

Selon la présente invention, même si typiquement les deux systèmes d'injection de phase aqueuse et de composé minéral sont fixés sur le même dispositif de traitement de gaz de fumées, il va de soi qu'ils fonctionnent indépendamment l'un de l'autre. En conséquence, il est possible de travailler uniquement en injectant des gouttelettes de phase aqueuse ou uniquement du composé minéral, si le cas d'espèce le requiert.

La figure 2 illustre une variante du dispositif de traitement des gaz de fumées selon la présente invention.

Comme on peut le voir, le dispositif 1 selon la présente invention comprend ici une tubulure d'injection de composé minéral pulvérulent 2 reliée à une source de composé minéral pulvérulent (non illustrée). La tubulure d'injection de composé minéral est agencée pour déboucher dans ladite conduite de gaz de fumées 3 (voir figures 4 et 5) et pour permettre la sortie de composé minéral via un orifice de sortie de composé minéral 14. La tubulure d'injection de composé minéral 2 présente une face externe 4 et une face interne 5. En fonctionnement, la face interne 5 est en contact avec ledit composé minéral pulvérulent qui est injecté dans la tubulure d'injection 2.

Le dispositif d'injection de composé minéral pulvérulent 1 comprend également une tubulure d'injection de phase aqueuse 6 sous forme de gouttelettes, qui est connectée à une alimentation en phase aqueuse 8, et qui est localisée dans un tube concentrique situé dans l'espace périphérique 9. La tubulure d'injection de phase aqueuse, bien que ce ne soit pas illustré ici, peut comprendre en outre une vanne d'arrêt 10. L'orifice de sortie de phase aqueuse 11 sous forme de gouttelettes de la tubulure d'injection de phase aqueuse est en pratique réalisé sous la forme d'une fente ou d'un pulvérisateur plan.

La pression de l'alimentation en phase aqueuse 8 est typiquement comprise entre 2 et 150 bar. Dans une variante, cette pression sera plutôt comprise entre 2 et 20 bar, de préférence entre 3 et 15 bar et de manière plus préférentielle d'environ 8 bar. Dans une autre variante, la pression sera comprise entre 10 et 150 bar, en particulier entre 20 et 100 bar. Ces hautes pressions permettent d'éviter un encrassement de la tubulure de pulvérisation.

Le dispositif d'injection de composé minéral comprend en outre une bride 13 munie d'orifices traversant 18 afin de boulonner ou fixer par tout autre moyen le dispositif de traitement de gaz de fumées à une conduite de gaz de fumées via une bride 23.

En effet, comme on peut le voir à la figure 5, la conduite de gaz de fumées 3 à traiter peut comporter un conduit d'introduction 22 pour le dispositif 1 selon la présente invention. Le conduit d'introduction 22 est muni d'une bride 23 à son extrémité. Le dispositif selon la présente invention 1 est introduit dans ce conduit et fixé dessus à l'aide des brides 13 et 23.

Comme on peut le voir sur ces figures 4 et 5, l'étape d'injection de composé minéral pulvérulent est effectuée dans la conduite de gaz de fumées 3 selon un angle de 90 à 150 degrés, de préférence inférieur ou égal à 145 degrés, de manière préférentielle inférieur ou égal à 140 degrés et en particulier inférieur ou égal à 135 degrés, par rapport au sens d'écoulement G des gaz de fumées.

Cette orientation de la tubulure du composé minéral par rapport au sens d'écoulement des gaz de fumées n'est en aucune façon liée à la forme de réalisation du dispositif selon l'invention. Ceci signifie que la forme de réalisation comprenant une pluralité de tubulures d'injection de phase aqueuse illustrée sur les figures 1 et 3 peut également être orientée de manière inclinée par rapport à la paroi de la conduite de gaz de fumées.

En outre, le dispositif selon la présente invention, dans la version illustrée aux figures 1A, 1B, 2A et 2B, peut être plus ou moins inséré dans la conduite de gaz de fumées, en fonction des désidératas et peut pénétrer typiquement d'une longueur comprise entre 0 et 40 cm au sein de la conduite de gaz.

Les considérations techniques comme la longueur de tubulure, les paramètres de fonctionnement du dispositif selon la présente invention, dans cette forme de réalisation, varient dans les mêmes mesures que ce qui a été décrit pour les figures 1A, 1B et 3.

Dans la forme de réalisation illustrée aux figures 2A et 2B, une deuxième bride 17 est présente sur le dispositif de traitement de gaz de fumées. Cette bride 17 est munie d'une série d'orifices traversant 19 agencés pour accueillir un moyen de fixation. La bride 17 est agencée pour être reliée à une source de composé minéral (non illustrée).

Avantageusement, une enveloppe externe 20 est présente autour dudit espace périphérique 9. L'enveloppe externe 20 présente de préférence un diamètre compris entre 100 et 250 mm, de préférence inférieur à 200 mm et de manière plus préférentielle entre 110 et 170 mm, en particulier entre 125 et 150 mm.

Dans l'espace périphérique 9, on prévoit une couche d'isolant entre ladite face externe 4 de ladite tubulure d'injection de composé minéral pulvérulent et l'enveloppe externe 20. L'isolant peut être simplement de l'air ou tout isolant connu de l'homme de métier et permet d'éviter le refroidissement de la face externe 4, ainsi isolée de la tubulure de solution aqueuse 6 ce qui réduit les risques d'agglomération des particules du composé minéral, en particulier de la chaux hydratée, circulant dans la tubulure d'injection 2.

Le dispositif selon la présente invention comprend en outre de préférence un capuchon ou dispositif de fermeture 21 dudit espace périphérique muni d'une série d'orifices parmi lesquels un orifice de sortie de composé minéral 14 et un orifice de sortie du tube concentrique à la tubulure d'injection de phase aqueuse 11.

Comme on peut également le voir dans cette forme de réalisation illustrée aux figures 2A, 2B, 4 et 5, la tubulure d'injection de phase aqueuse 6 est agencée dans un tube concentrique, duquel la tubulure d'injection de phase aqueuse 25 est rétractable, ce qui permet de nettoyer ou changer la tubulure d'injection de la phase aqueuse sans arrêter l'injection de composé minéral. Pour faciliter l'extraction de la tubulure d'injection de phase aqueuse, la présente invention prévoit une légère courbure dans la tubulure d'injection de composé minéral, qui reste la plus faible possible pour éviter les obstacles au sein du tube essentiellement cylindrique d'amenée de composé minéral 2 et réduire ainsi l'agglomération de composé minéral sur les parois.

Pour la forme de réalisation illustrée aux figures 2A, 2B, 4 et 5, la tubulure principale d'injection de composé minéral présente typiquement un diamètre de 100 mm et le tube concentrique à la tubulure d'injection de phase aqueuse présente un diamètre de 25 mm. Les deux tubes sont confinés dans une enveloppe 20 présentant un diamètre d'environ 125 mm.

### Exemples.-

### Exemple 1.-

Des tests d'abattement de SO₂ ont été réalisés en utilisant l'installation pilote décrite dans WO 2007/000433 (figure 2 et p10, I.20 à p12, I.14). Dans un réacteur tubulaire, on a fait passer des particules d'hydroxyde de calcium (chaux hydratée), à co-courant d'un gaz contenant 1500 mg/Nm³ de SO₂, 9% Vol. de CO₂,et 10% Vol. de H₂O, et présentant un débit total de 1,132 Nm³/h et une température de 220°C.

Deux types de chaux hydratées ont été utilisés. Le premier échantillon (Ech 1) était une chaux hydratée obtenue suivant l'enseignement de la demande de brevet WO 97/14650. Le deuxième échantillon (Ech 2) était une chaux hydratée obtenue suivant l'enseignement de la demande de brevet WO 2007/000433.

Le tableau présente les taux d'abattement de SO₂ obtenus en faisant varier l'humidité des réactifs testés de 0,7 % en poids par rapport au poids de chaux hydratée à 4,1 % en poids, pour un facteur stoechiométrique de 2,5 et un débit d'absorbant de Q.

Le débit d'absorbant Q correspond au débit de chaux hydratée nécessaire à la neutralisation du débit de SO₂, si le rendement de la réaction était de 100% (équilibre stoechiométrique), multiplié par un facteur "stoechiométrique", tenant compte qu'une partie de l'absorbant injecté ne participe pas réellement à la réaction. Dans le cas présent, Q vaut 5,05 g/h.

**Tableau.-**

| Echantillon | Humidité à 150°C en % massiques | Abattement du SO₂ à un facteur stoechiométrique de 2,5 (%) |
|---|---|---|
| Ech 1 | 0,7 % | 18 |
| | 2,0 % | 27 |
| | 2,6 % | 28 |
| | 3,0 % | 29 |
| | 3,7 % | 29 |
| | 4,0 % | 29 |
| Ech 2 | 0,9 % | 27 |
| | 1,9 % | 36 |
| | 2,6 % | 38 |
| | 2,7 % | 39 |
| | 3,8 % | 36 |
| | 4,1 % | 35 |

### Exemple 2 .- Test industriel

Les paramètres du gaz de fumées sont les suivants :
débit total : 20 000 Nm³/h
température : 180°C
teneur en eau : 4-5% vol
teneur en O₂ : 15-18% vol

Une chaux hydratée préparée suivant l'enseignement de la demande de brevet WO2007/000433 a été injectée en amont d'un filtre à manches pour l'abattement du SO₂. Pour une teneur en SO₂ de 1800 mg/Nm³ en amont du filtre à manches et de 700 mg/Nm³ à la sortie, une réduction de 15 à 20 % de la consommation de chaux a été observée lorsque la chaux était humidifiée en comparaison de la situation lorsque la chaux n'était pas humidifiée (17 dm³/h eau ou rapport massique eau/chaux de 0,25). En effet, on observe un taux de transformation de la chaux de 35% lorsque la chaux n'est pas humidifiée et de 40% lorsqu'elle est humidifiée. Le dispositif de la figure 1 selon la présente invention a été utilisé; il présentait une inclinaison d'environ 120° par rapport au sens d'écoulement des gaz.**Exemple 3.- Test industriel**

Les paramètres du gaz de fumées sont les suivants :
débit total : 250 000 Nm³/h
température : 150°C
teneur en eau : 10% vol
teneur en O₂ : 16% vol

Une chaux hydratée préparée suivant l'enseignement de la demande de brevet WO 2007/000433 a été injectée en amont d'un filtre à manches afin d'étudier les effets de son taux d'humidification sur les taux d'abattement de SO₂.

Ainsi, pour une teneur en SO₂ de 224 mg/Nm³ en amont du filtre à manches et pour une même consommation de chaux (débit de 50 kg/h), on obtient une teneur en SO₂ à la sortie du filtre de respectivement 134 mg/Nm³ (ce qui équivaut à un taux de transformation de la chaux de 53%) lorsque la chaux n'est pas humidifiée et de 112 mg/Nm³ (taux de transformation de la chaux de 67%) lorsque la chaux est humidifiée à raison de 30 dm³/h d'eau (rapport massique eau/chaux de 0,6). On observe donc que la chaux humidifiée permet un gain d'abattement de SO₂ de 25 % en comparaison de la même chaux non humidifiée.

### Exemple 4.- test industriel

Une chaux hydratée de type standard a été injectée dans la même installation et avec les mêmes paramètres du gaz de fumées que l'exemple 3 afin d'étudier les effets de son taux d'humidification sur les taux d'abattement de SO₂.

Ainsi, pour une teneur en SO₂ de 420 mg/Nm³ en amont du filtre à manches et pour une même consommation de chaux (débit de 120 kg/h), on obtient une teneur en SO₂ à la sortie du filtre de respectivement 336 mg/Nm³ (ce qui équivaut à un taux de transformation de la chaux de 20%) lorsque la chaux n'est pas humidifiée, de 266 mg/Nm³ (taux de transformation de la chaux de 37 %) lorsque la chaux est humidifiée à raison de 30 dm³/h d'eau (rapport massique eau/chaux de 0,25) et de 241 mg/Nm³ (taux de transformation de la chaux de 43%) lorsque la chaux est humidifiée à raison de 120 dm³/h d'eau (rapport massique eau/chaux de 1). On observe donc qu'une chaux humidifiée à hauteur de 30 et 120 dm³/h d'eau permet un gain d'abattement de SO₂ de respectivement 85 % et 110 % en comparaison de la même chaux non humidifiée.

Il est bien entendu que la présente invention n'est en aucune façon limitée aux formes de réalisation décrites ci-dessus et que bien des modifcations peuvent y être apportées dans le cadre des revendications annexées. Par exemple, il est possible de combiner la présence du distributeur 7 avec une seule tubulure d'injection d'eau 6 ou tout autre nombre souhaité dans le dispositif de traitement de gaz de fumées selon la présente invention. Il est également possible que les assemblages des figures 3 et 4 comportent, comme à la figure 5, un conduit d'introduction 22 muni d'une bride 23 à son extrémité.

## Revendications

1. Procédé de traitement de gaz présentant un sens d'écoulement prédéterminé dans une conduite de gaz comprenant les étapes
a) d'injection de composé pulvérulent dans la conduite de gaz en un point d'injection de composé pulvérulent, par l'intermédiaire d'une tubulure d'injection de composé pulvérulent, ladite tubulure d'injection présentant une face externe et une face interne agencée pour être en contact avec ledit composé pulvérulent, de manière à permettre la formation d'un nuage ou flux de particules de composé pulvérulent dans ladite conduite de gaz,
b) d'injection d'une phase liquide aqueuse monophasique sous forme de gouttelettes dans ladite conduite de gaz,
c) de captation de polluants des gaz par ledit composé pulvérulent, et
d) de récupération séparée dudit composé pulvérulent enrichi en polluants et des gaz appauvris en polluants,
-**caractérisé en ce que** ladite étape d'injection de phase liquide aqueuse monophasique sous forme de gouttelettes est effectuée à l'intérieur de ladite conduite de gaz dans le nuage ou flux injecté de particules de composé pulvérulent, de manière à humidifier ces particules de composé pulvérulent à l'intérieur de la conduite de gaz, lors de leur injection, selon un rapport pondéral entre la phase liquide aqueuse monophasique injectée sous forme de gouttelettes et le composé pulvérulent injecté supérieur ou égal à 0,05 et inférieur ou égal à 1,2, ladite étape d'injection de phase liquide aqueuse monophasique étant réalisée par l'intermédiaire d'au moins une tubulure d'injection de phase liquide aqueuse monophasique située dans un espace périphérique localisé autour de ladite face externe et présentant une enveloppe externe et **en ce que** le procédé comprend en outre une isolation de ladite face externe par au moins une couche d'isolant disposée dans ledit espace périphérique.

2. Procédé selon la revendication 1, dans lequel ladite étape d'injection de composé pulvérulent est effectuée dans la conduite de gaz suivant un sens d'injection formant un angle de 90 à 150 degrés, de préférence inférieur ou égal à 145 degrés, de manière préférentielle inférieur ou égal à 140 degrés et en particulier inférieur ou égal à 135 degrés, par rapport au sens d'écoulement des gaz.

3. Procédé selon l'une des revendications 1 et 2, dans lequel ledit composé pulvérulent présente une taille moyenne de particules d₅₀ inférieure à 80 µm, avantageusement inférieure à 50 µm, en particulier inférieure à 35 µm, de préférence inférieure à 25 µm et notamment inférieure ou égale à 10 µm, en particulier inférieure ou égale à 8 µm.

4. Procédé selon l'une quelconque des revendications précédentes, dans lequel ledit composé pulvérulent présente, avant injection dans ladite conduite de gaz, une humidité (teneur massique en eau) comprise entre 0,2 et 10%, en particulier entre 0,5 et 4 %, de préférence inférieure à 2%, en particulier inférieure à 1,5%.

5. Procédé selon l'une quelconque des revendications précédentes, dans lequel le rapport pondéral entre la phase aqueuse injectée sous forme de gouttelettes et le composé pulvérulent injecté est supérieur ou égal à 0,1, de manière préférentielle supérieur ou égal à 0,2 et inférieur ou égal à 1 et plus particulièrement inférieur ou égal à 0,8.

6. Procédé selon l'une quelconque des revendications précédentes, dans lequel lesdits gaz présentent, avant injection dudit composé pulvérulent, une température comprise entre 10°C et 100°C, de préférence entre 15°C et 80°C et de manière préférentielle entre 20°C et 70°C.

7. Procédé selon l'une quelconque des revendications 1 à 5, dans lequel lesdits gaz présentent, avant injection dudit composé pulvérulent, une température comprise entre 100°C et 300°C, de préférence entre 135°C et 250°C et de manière préférentielle entre 150°C et 230°C, en particulier entre 160°C et 220°C.

8. Procédé selon l'une quelconque des 1 à 5, dans lequel lesdits gaz présentent, avant injection dudit composé pulvérulent, une température comprise entre 300°C et 500°C, de préférence entre 320°C et 450°C et de manière préférentielle entre 330°C et 400°C.

9. Procédé selon l'une quelconque des revendications 1 à 5, dans lequel lesdits gaz présentent, avant injection dudit composé pulvérulent, une température comprise entre 850°C et 1100°C, de préférence entre 900°C et 1100°C et de manière préférentielle entre 950°C et 1050°C.

10. Procédé selon l'une quelconque des revendications précédentes, dans lequel lesdits gaz présentent, après injection dudit composé pulvérulent et de la phase aqueuse sous forme de gouttelettes, une température comprise entre n et n - 10°C, de préférence entre n et n - 8°C, de préférence entre n et n - 5°C, en particulier entre n et n - 3°C, n étant la température des gaz avant injection du composé pulvérulent et de la phase aqueuse.

11. Procédé selon l'une quelconque des revendications précédentes, dans lequel ladite injection de la phase aqueuse est réalisée à une pression comprise entre 2 et 150 bar, en particulier entre 3 et 15 bar et de manière préférentielle d'environ 8 bar ou entre 20 et 150 bar, avantageusement entre 30 et 100 bar.

12. Procédé suivant l'une quelconque des revendications 1 à 11, **caractérisé en ce que** le composé pulvérulent est un composé minéral choisi parmi de la chaux hydratée, du carbonate ou bicarbonate de sodium, de l'halloysite et de ia sépiolite, un composé organique carboné choisi parmi du charbon actif et du coke de lignite, ou un mélange de ces composés.

13. Procédé suivant l'une quelconque des revendications 1 à 12, **caractérisé en ce que** la phase aqueuse est constituée d'eau ou d'une solution aqueuse de composé alcalin ou à base d'ammoniac ou d'halogénures ou encore d'acides.

14. Dispositif d'injection de composé pulvérulent à introduire dans une conduite de gaz de fumées (3), comprenant une source de composé pulvérulent, une tubulure d'injection de composé pulvérulent (2) alimentée par la source de composé pulvérulent et agencée pour déboucher dans ladite conduite de gaz, ladite tubulure d'injection de composé pulvérulent présentant une face externe (4) et une face interne (5) agencée pour être en contact avec ledit composé pulvérulent, ledit dispositif d'injection de composé pulvérulent comprenant en outre une source de phase liquide aqueuse monophasique et au moins une tubulure d'injection de phase liquide aqueuse monophasique (6) sous forme de gouttelettes alimentée par cette source de phase liquide aqueuse monophasique, **caractérisé en ce que** ladite au moins une tubulure d'injection de phase liquide aqueuse monophasique (6) est située dans un espace périphérique (9) localisé autour de ladite face externe (4) de la tubulure d'injection de composé pulvérulent (2) et présentant une enveloppe externe (20), et **en ce qu'**au moins une couche d'isolant est disposée dans ledit espace périphérique entre ladite face externe (4) de ladite tubulure d'injection de composé pulvérulent et l'enveloppe externe (20).

15. Dispositif selon la revendication 14, comprenant une pluralité de tubulures d'injection de phase aqueuse (6) sous forme de gouttelettes, reliées chacune à un distributeur (7) connecté à ladite source de phase aqueuse, chaque tubulure de ladite pluralité de tubulures d'injection de phase aqueuse (6) étant située dans ledit espace périphérique et étant en outre munie d'une vanne d'arrêt (10).

16. Dispositif selon l'une des revendications 14 et 15, dans lequel chaque tubulure d'injection de phase aqueuse (6) est agencée dans un tube concentrique hors duquel la tubulure d'injection de phase aqueuse est rétractable (25).

17. Dispositif selon l'une quelconque des revendications 14 à 16, dans lequel chaque tubulure d'injection de phase aqueuse (6) comporte un orifice de sortie (11) sous la forme d'une fente.

18. Dispositif selon l'une quelconque des revendications 15 à 17, dans lequel le distributeur (7) est relié à un moyen de mise sous pression agencé pour conférer à la phase aqueuse une pression comprise entre 2 et 150 bar, en particulier entre 3 et 15 bar et de manière plus préférentielle d'environ 8 bar ou entre 20 et 150 bar, avantageusement entre 30 et 100 bar..

19. Dispositif selon l'une quelconque des revendications 14 à 18, comprenant en outre un dispositif de fermeture dudit espace périphérique muni d'une série d'orifices parmi lesquels un orifice à composé minéral et au moins un orifice à phase aqueuse, ledit orifice à composé minéral étant agencé pour loger une sortie de ladite tubulure d'injection de chaux hydratée, chaque orifice à phase aqueuse étant agencé pour loger une sortie de chaque tubulure d'injection de phase aqueuse.

20. Dispositif selon l'une quelconque des revendications 14 à 19, dans lequel ladite enveloppe externe (20) présente un diamètre compris entre 100 et 250 mm, de préférence inférieur à 200 mm et de manière plus préférentielle entre 110 et 170 mm, en particulier 125 et 150 mm.

21. Dispositif selon l'une quelconque des revendications 14 à 20, dans lequel ladite tubulure d'injection de composé pulvérulent (2) présente un diamètre compris entre 75 et 150 mm, de préférence entre 80 et 125 mm et en particulier d'environ 100 mm.

22. Dispositif selon l'une quelconque des revendications 14 à 21, dans lequel chaque tubulure d'injection de phase aqueuse (6) présente un diamètre compris entre 5 et 30 mm, de préférence entre 6 et 20 mm et de manière plus préférentielle entre 8 et 16 mm.

## Patentansprüche

1. Verfahren zur Behandlung von Gasen mit einer vorbestimmten Strömungsrichtung in einer Gasleitung, welches folgende Schritte umfasst:
a) Einspritzung einer pulverförmigen Verbindung in die Gasleitung an einem Einspritzpunkt der pulverförmigen Verbindung, mittels eines Einspritzrohres der pulverförmigen Verbindung, wobei das erwähnte Einspritzrohr eine Außenseite und eine Innenseite aufweist, angeordnet, um in Kontakt mit der erwähnten pulverförmigen Verbindung zu sein, um die Bildung einer Wolke oder eines Stroms von Teilchen der pulverförmigen Verbindung in der erwähnten Gasleitung zu erlauben,
b) Einspritzung einer einphasigen wässrigen flüssigen Phase in Form von Tröpfchen in die erwähnte Gasleitung,
c) Bindung von Schadstoffen der Gase durch die erwähnte pulverförmige Verbindung, und
d) getrennte Rückgewinnung der erwähnten pulverförmigen Verbindung, die mit Schadstoffen angereichert ist, und der Gase, aus denen die Schadstoffen entfernt sind,
**dadurch gekennzeichnet, dass** der erwähnte Schritt der Einspritzung der einphasigen wässrigen flüssigen Phase in Form von Tröpfchen im Inneren der erwähnten Gasleitung in der eingespritzten Wolke oder im eingespritzten Strom von Teilchen der pulverförmigen Verbindung erfolgt, sodass diese Teilchen der pulverförmigen Verbindung im Inneren der Gasleitung beim Einspritzen nach einem Gewichtsverhältnis zwischen der in Form von Tröpfchen eingespritzten einphasigen wässrigen flüssigen Phase und der pulverförmigen Verbindung von mehr als oder gleich 0,05 und von weniger als oder gleich 1,2 befeuchtet werden, wobei der erwähnte Schritt der Einspritzung der einphasigen wässrigen flüssigen Phase mittels eines Einspritzrohres der einphasigen wässrigen flüssigen Phase erfolgt, welches sich in einem umgebenden Raum rund um die erwähnte Außenseite befindet und eine Außenhülle darstellt, und dadurch, dass dieses Verfahren ferner eine Isolation der erwähnten Außenseite durch zumindest eine Isolationsschicht umfasst, die im erwähnten umgebenden Raum angebracht ist.

2. Verfahren nach Anspruch 1, wobei der erwähnte Schritt der Einspritzung der pulverförmigen Verbindung in der Gasleitung gemäß einer Einspritzrichtung ausgeführt wird, die einen Winkel von 90 bis 150 Grad beschreibt, bevorzugt weniger als oder gleich 145 Grad, vorzugsweise weniger als oder gleich 140 Grad und insbesondere weniger als oder gleich 135 Grad im Verhältnis zur Strömungsrichtung der Gase.

3. Verfahren nach irgendeinem der Ansprüche 1 und 2, wobei die erwähnte pulverförmige Verbindung eine durchschnittliche Partikelgröße d50 von weniger als 80 µm aufweist, vorteilhafterweise weniger als 50 µm, insbesondere weniger als 35 µm, bevorzugt weniger als 25 µm und namentlich weniger als oder gleich 10 µm, insbesondere weniger als oder gleich 8 µm.

4. Verfahren nach irgendeinem der vorigen Ansprüche, wobei die erwähnte pulverförmige Verbindung, vor der Einspritzung in die erwähnte Gasleitung, eine Feuchtigkeit (Massegehalt an Wasser) von zwischen 0,2 und 10 % aufweist, insbesondere zwischen 0,5 und 4 %, bevorzugt weniger als 2 %, insbesondere weniger als 1,5 %.

5. Verfahren nach irgendeinem der vorigen Ansprüche, wobei das Gewichtsverhältnis zwischen der in Form von Tröpfchen eingespritzten wässrigen Phase und der eingespritzten pulverförmigen Verbindung mehr als oder gleich 0,1 beträgt, vorzugsweise mehr als oder gleich 0,2 und weniger als oder gleich 1 und genauer gesagt weniger als oder gleich 0,8.

6. Verfahren nach irgendeinem der vorigen Ansprüche, wobei die erwähnten Gase, vor der Einspritzung der erwähnten pulverförmigen Verbindung, eine Temperatur von zwischen 10 °C und 100 °C, bevorzugt zwischen 15 °C und 80 °C und vorzugsweise zwischen 20 °C und 70 °C aufweisen.

7. Verfahren nach irgendeinem der Ansprüche 1 bis 5, wobei die erwähnten Gase, vor der Einspritzung der erwähnten pulverförmigen Verbindung, eine Temperatur von zwischen 100 °C und 300 °C, bevorzugt zwischen 135 °C und 250 °C und vorzugsweise zwischen 150 °C und 230 °C, insbesondere zwischen 160 °C und 220 °C aufweisen.

8. Verfahren nach irgendeinem der Ansprüche 1 bis 5, wobei die erwähnten Gase, vor der Einspritzung der erwähnten pulverförmigen Verbindung, eine Temperatur von zwischen 300 °C und 500 °C, bevorzugt zwischen 320 °C und 450 °C und vorzugsweise zwischen 330 °C und 400 °C aufweisen.

9. Verfahren nach irgendeinem der Ansprüche 1 bis 5, wobei die erwähnten Gase, vor der Einspritzung der erwähnten pulverförmigen Verbindung, eine Temperatur von zwischen 850 °C und 1.100 °C, bevorzugt zwischen 900 °C und 1.100 °C und vorzugsweise zwischen 950 °C und 1.050 °C aufweisen.

10. Verfahren nach irgendeinem der vorigen Ansprüche, wobei die erwähnten Gase, nach der Einspritzung der erwähnten pulverförmigen Verbindung und der wässrigen Phase in Form von Tröpfchen, eine Temperatur von zwischen n und n - 10 °C, bevorzugt zwischen n und n - 8 °C, bevorzugt zwischen n und n - 5 °C, insbesondere zwischen n und n - 3 °C aufweisen, wobei n die Temperatur der Gase vor der Einspritzung der pulverförmigen Verbindung und der wässrigen Phase ist.

11. Verfahren nach irgendeinem der vorigen Ansprüche, wobei die erwähnte Einspritzung der wässrigen Phase bei einem Druck von zwischen 2 und 150 bar ausgeführt wird, insbesondere zwischen 3 und 15 bar und vorzugsweise von etwa 8 bar oder zwischen 20 und 150 bar, vorteilhafterweise zwischen 30 und 100 bar.

12. Verfahren nach irgendeinem der Ansprüche 1 bis 11, **dadurch gekennzeichnet, dass** die pulverförmige Verbindung eine mineralische Verbindung, ausgewählt aus gelöschtem Kalk, Natriumcarbonat oder -bicarbonat, Halloysit und Sepiolith, eine organische Kohlenstoffverbindung ausgewählt aus Aktivkohle und Braunkohlenkoks, oder eine Mischung dieser Verbindungen ist.

13. Verfahren nach irgendeinem der Ansprüche 1 bis 12, **dadurch gekennzeichnet, dass** die wässrige Phase aus Wasser oder einer wässrigen Lösung einer alkalischen Verbindung oder auf Grundlage von Ammoniak oder Halogeniden oder auch Säuren besteht.

14. Vorrichtung zur Einspritzung der pulverförmigen Verbindung zur Einbringung in eine Gasleitung von Rauchgasen (3), welche eine Quelle der pulverförmigen Verbindung umfasst, ein Einspritzrohr der pulverförmigen Verbindung (2), beschickt von der Quelle der pulverförmigen Verbindung und angeordnet, um in die erwähnte Gasleitung zu münden, wobei das erwähnte Einspritzrohr der pulverförmigen Verbindung eine Außenseite (4) und eine Innenseite (5) aufweist, angeordnet, um in Kontakt mit der erwähnten pulverförmigen Verbindung zu sein, wobei die erwähnte Vorrichtung zur Einspritzung der pulverförmigen Verbindung ferner eine Quelle der einphasigen wässrigen flüssigen Phase und zumindest ein Einspritzrohr der einphasigen wässrigen flüssigen Phase (6) in Form von Tröpfchen umfasst, beschickt von dieser Quelle der einphasigen wässrigen flüssigen Phase, **dadurch gekennzeichnet, dass** sich das erwähnte zumindest eine Einspritzrohr der einphasigen wässrigen flüssigen Phase (6) in einem umgebenden Raum (9) rund um die erwähnte Außenseite (4) des Einspritzrohres der pulverförmigen Verbindung (2) befindet und eine Außenhülle (20) aufweist, und dadurch, dass zumindest eine Isolierschicht im erwähnten umgebenden Raum zwischen der erwähnten Außenseite (4) des erwähnten Einspritzrohres der pulverförmigen Verbindung und der Außenhülle (20) angebracht ist.

15. Vorrichtung nach Anspruch 14, welche eine Vielzahl von Einspritzrohren der wässrigen Phase (6) in Form von Tröpfchen umfasst, jeweils verbunden mit einem Verteiler (7), verbunden mit der erwähnten Quelle der wässrigen Phase, wobei sich jedes Rohr der erwähnten Vielzahl von Einspritzrohren der wässrigen Phase (6) im erwähnten umgebenden Raum befindet und überdies mit einem Absperrventil (10) ausgestattet ist.

16. Vorrichtung nach einem der Ansprüche 14 und 15, wobei jedes Einspritzrohr der wässrigen Phase (6) in einem konzentrischen Rohr angeordnet ist, aus dem das Einspritzrohr der wässrigen Phase zurückziehbar ist (25).

17. Vorrichtung nach irgendeinem der Ansprüche 14 bis 16, wobei jedes Einspritzrohr der wässrigen Phase (6) eine Ausgangsöffnung (11) in Form eines Schlitzes umfasst.

18. Vorrichtung nach irgendeinem der Ansprüche 15 bis 17, wobei der Verteiler (7) mit einem Mittel zum Druckaufbau verbunden ist, angeordnet, um die wässrige Phase mit einem Druck von zwischen 2 und 150 bar zu beaufschlagen, insbesondere zwischen 3 und 15 bar und vorzugsweise von etwa 8 bar oder zwischen 20 und 150 bar, vorteilhafterweise zwischen 30 und 100 bar.

19. Vorrichtung nach irgendeinem der Ansprüche 14 bis 18, welche ferner eine Vorrichtung zum Abschließen des erwähnten umgebenden Raums umfasst, ausgestattet mit einer Reihe von Öffnungen, darunter eine Öffnung für die mineralische Verbindung und zumindest eine Öffnung für die wässrige Phase, wobei die erwähnte Öffnung für die mineralische Verbindung angeordnet ist, um einen Ausgang des erwähnten Einspritzrohres des gelöschten Kalks aufzunehmen, und wobei jede Öffnung für die wässrige Phase angeordnet ist, um einen Ausgang jedes Einspritzrohres der wässrigen Phase aufzunehmen.

20. Vorrichtung nach irgendeinem der Ansprüche 14 bis 19, wobei die erwähnte Außenhülle (20) einen Durchmesser von zwischen 100 und 250 mm aufweist, bevorzugt weniger als 200 mm und noch besser zwischen 110 und 170 mm, insbesondere 125 und 150 mm.

21. Vorrichtung nach irgendeinem der Ansprüche 14 bis 20, wobei das erwähnte Einspritzrohr der pulverförmigen Verbindung (2) einen Durchmesser von zwischen 75 und 150 mm aufweist, bevorzugt zwischen 80 und 125 mm und insbesondere von etwa 100 mm.

22. Vorrichtung nach irgendeinem der Ansprüche 14 bis 21, wobei jedes Einspritzrohr der wässrigen Phase (6) einen Durchmesser von zwischen 5 und 30 mm aufweist, bevorzugt zwischen 6 und 20 mm und noch besser zwischen 8 und 16 mm.

## Claims

1. A method for treating gas having a predetermined flow direction in a gas conduit comprising the steps of
a) injecting a powdery compound into the gas conduit at an injection point of a powdery compound, via a powdery compound injection piping, said injection piping having an external face and an internal face arranged so as to be in contact with said powdery compound so as to allow formation of a cloud or flow of particles of powdery compound in said gas conduit,
b) injecting a monophasic liquid aqueous phase as droplets into said gas conduit,
c) capturing pollutants of the gases with said powdery compound, and
d) separately recovering said powdery compound enriched in pollutants and the gases depleted in pollutants,
**characterized in that** said step for injecting a monophasic liquid aqueous phase as droplets is carried out inside said gas conduit in the injected cloud or flow of powdery compound particles, so as to humidify these powdery compound particles inside the gas conduit, during their injection, according to a weight ratio between the monophasic liquid aqueous phase injected as droplets and the injected powdery compound of greater than or equal to 0.05 and less than or equal to 1.2, said step for injecting a monophasic liquid aqueous phase being carried out via at least one monophasic liquid aqueous phase injection piping located in a peripheral space localized around said external face and having an external cover and **in that** the method further comprises isolation of said external face by at least one insulating layer positioned in said peripheral space.

2. The method according to claim 1, wherein said powdery compound injection step is carried out in the gas conduit following an injection direction forming an angle from 90 to 150 degrees, preferably less than or equal to 145 degrees, preferentially less than or equal to 140 degrees and in particular less than or equal to 135 degrees, relatively to the flow direction of the gases.

3. The method according to one of claims 1 and 2, wherein said powdery compound has an average particle size d₅₀ of less than 80 µm, advantageously less than 50 µm, in particular less than 35 µm, preferably less than 25 µm and notably less than or equal to 10 µm, in particular less than or equal to 8 µm.

4. The method according to any of the preceding claims, wherein said powdery compound, before injection into said gas conduit, has a humidity (water mass content) comprised between 0.2 and 10%, in particular between 0.5 and 4%, preferably less than 2%, in particular less than 1.5%.

5. The method according to any of the preceding claims, wherein the weight ratio between the aqueous phase injected as droplets and the injected powdery compound is greater than or equal to 0.1, preferentially greater than or equal to 0.2 and less than or equal to 1 and more particularly less than or equal to 0.8.

6. The method according to any of the preceding claims, wherein said gases before injection of said powdery compound, have a temperature comprised between 10°C and 100°C, preferably between 15°C and 80°C and preferentially between 20°C and 70°C.

7. The method according to any of claims 1 to 5, wherein said gases before injection of said powdery compound, have a temperature comprised between 100°C and 300°C, preferably between 135°C and 250°C and preferentially between 150°C and 230°C, in particular between 160°C and 220°C.

8. The method according to any of claims 1 to 5, wherein said gases, before injection of said powdery compound, have a temperature comprised between 300°C and 500°C, preferably between 320°C and 450°C and preferentially between 330°C and 400°C.

9. The method according to any of claims 1 to 5, wherein said gases before injection of said powdery compound, have a temperature comprised between 850°C and 1,100°C, preferably between 900°C and 1,100°C and preferentially between 950°C and 1050°C.

10. The method according to any of the preceding claims, where in said gases, after injection of said powdery compound and of the aqueous phase as droplets, have a temperature comprised between n and n-10° C, preferably between n and n-8°C, preferentially between n and n-5°C, in particular between n and n-3°C, n being the temperature of the gases before injection of the powdery compound and of the aqueous phase.

11. The method according to any of the preceding claims, wherein said injection of the aqueous phase is carried out at a pressure comprised between 2 and 150 bars, in particular between 3 and 15 bars and preferentially of about 8 bars or between 20 and 150 bars, advantageously between 30 and 100 bars.

12. The method according to any of claims 1 to 11, **characterized in that** the powdery compound is a mineral compound selected from hydrated lime, sodium carbonate or bicarbonate, halloysite and sepiolite, a carbonaceous organic compound selected from active coal and lignite coke, or a mixture of these compounds.

13. The method according to any of claims 1 to 12, **characterized in that** the aqueous phase consists of water or of an aqueous solution of an alkaline or ammonia-based compound or based on halides, or on acids.

14. A device for injection of a powdery compound, to be introduced into a flue gas conduit (3) comprising a source of powdery compound, a powdery compound injection piping (2) supplied by the source of powdery compound and laid out in order to open into said gas conduit, said powdery compound injection piping having an external face (4) and an internal face (5) arranged so as to be in contact with said powdery compound, said powdery compound injection device further comprising a source of monophasic liquid aqueous phase and at least one piping (6) for injecting a aqueous phase as droplets supplied by this monophasic liquid aqueous phase source, **characterized in that** said at least one monophasic liquid aqueous phase injection piping (6) is located in a peripheral space (9) localized around said external face (4) of the powdery compound injection piping (2) and having an external cover (20) and **in that** at least one insulating layer is positioned in said peripheral space between said external face (4) of said powdery compound injection piping and the external cover (20).

15. The device according to claim 14, comprising a plurality of pipings (6) for injecting an aqueous phase as droplets, each connected to a distributor (7) connected to said aqueous phase source, each piping of said plurality of aqueous phase injection pipings (6) being located in said peripheral space and further being provided with a stop valve (10).

16. The device according to one of claims 14 and 15, wherein each aqueous phase injection piping (6) is laid out in a concentric tube out of which the aqueous phase injection piping is retractable (25).

17. The device according to any of claims 14 to 16, wherein each aqueous phase injection piping (6) includes an outlet orifice (11) as a slot.

18. The device according to any of claims 15 to 17, wherein the distributor (7) is connected to a pressurization means for imparting to the aqueous phase a pressure comprised between 2 and 150 bars, in particular between 3 and 15 bars and more preferentially of about 8 bars or between 20 and 150 bars, advantageously between 30 and 100 bars.

19. The device according to any of claims 14 to 18, further comprising a device for closing said peripheral space provided with a series of orifices, among which a mineral compound orifice and at least one aqueous phase orifice, said mineral compound orifice being laid out for housing an outlet of said hydrated lime injection piping, each aqueous phase orifice being laid out for housing an outlet of each aqueous phase injection piping.

20. The device according to any of claims 14 to 19, wherein said external cover (20) has a diameter comprised between 100 and 250 mm, preferably less than 200 mm and more preferentially between 110 and 170 mm, in particular 125 and 150 mm.

21. The device according to any of claims 14 to 20, wherein said powdery compound injection piping (2) has a diameter comprised between 75 and 150 mm, preferably between 80 and 125 mm and in particular of about 100 mm.

22. The device according to any of claims 14 to 21, wherein each aqueous phase injection piping (6) has a diameter comprised between 5 and 30 mm, preferably between 6 and 20 mm and more preferentially between 8 and 16 mm.
